# EUROPEAN PATENT SPECIFICATION

(11) **EP 3 640 001 B1**
(45) Date of publication and mention of the grant of the patent: **21.04.2021**
(21) Application number: 19201624.4
(22) Date of filing: 07.10.2019
(51) Int. Cl.: B29C 45/66, B29C 45/80

(54) **INJECTION MOLDING MACHINE**
SPRITZGIESSMASCHINE
MACHINE DE MOULAGE À INJECTION

(30) Priority: 17.10.2018 JP 2018195970
(43) Date of publication of application: 22.04.2020
(73) Proprietor: SUMITOMO HEAVY INDUSTRIES, LTD., Tokyo 141-6025 (JP)
(72) Inventor: MOROZUMI, Tomohito, Chiba, 263-0001 (JP); TANAKA, Yoshitada, Chiba, 263-0001 (JP); ITO, Yosuke, Chiba, 263-0001 (JP)
(74) Representative: Louis Pöhlau Lohrentz

(56) References cited:
- EP-A1- 1 584 445
- JP-A- 2009 000 851
- US-A- 5 045 253
- US-A1- 2011 018 157

## Description

### BACKGROUND OF THE INVENTION

### Field of the Invention

The present invention relates to an injection molding machine.

### Description of Related Art

An injection molding machine which opens or closes a mold or clamps the mold using a toggle link mechanism is known. The toggle link mechanism is connected by a link and a connection pin, and a bush is provided between the link and the connection pin. In the toggle link mechanism, if the mold is repeatedly opened and closed, the bush and the connection pin slide, and thus, the bush is worn.

Accordingly, a method of increasing lubricity of a sliding surface by interposing a lubricant such as oil between the bush and the connection pin to reduce the wear of the bush is known. Japanese Unexamined Patent Publication No. 2000-141436 discloses a lubrication device of a toggle link mechanism having a seal structure including seal grooves provided on both end portions of a bush inner diameter surface and seal materials fitted to the seal grooves. United States Patent No. 5, 045, 253 discloses an automatic mold thickness adjusting method applied to a mold clamping apparatus which includes a toggle mechanism. European Patent Publication No. 1 584 445 discloses a mold clamping force adjustment method of a toggle type injection molding machine. United States Patent Publication No. 2011/018157 discloses a method of adjusting a mold thickness of a toggle-type mold clamping device. Japanese Patent Publication No. 2009-000851 discloses a mold clamping device of an injection molding machine having a toggle mechanism.

### SUMMARY OF THE INVENTION

Meanwhile, it is not easy to detect wear of a bush provided inside a link, and if a mechanism for detecting the wear of the bush is provided inside the link, there are problems that a device is complicated and a cost increases.

Accordingly, an object of the present invention is to provide an injection molding machine which detects the wear of the bush from an outside.

According to an embodiment of the present invention, there is provided an injection molding machine including: a toggle mechanism which connects a movable platen and a rear platen, in which the toggle mechanism includes a plurality of links, a first connection portion which connects the movable platen and the link, a second connection portion which connects the links to each other, and a third connection portion which connects the rear platen and the link, at least one of the first to third connection portions includes a bush, a connection pin which is inserted into the bush, and a wear detection unit which detects wear of sliding surfaces of the bush and the connection pin, and the wear detection unit detects a position of a member in which the bush is disposed.

According to the present invention, it is possible to provide the injection molding machine which detects the wear of the bush from an outside.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Figs. 3A and 3B are cross-sectional schematic views explaining a wear detection unit of an embodiment.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

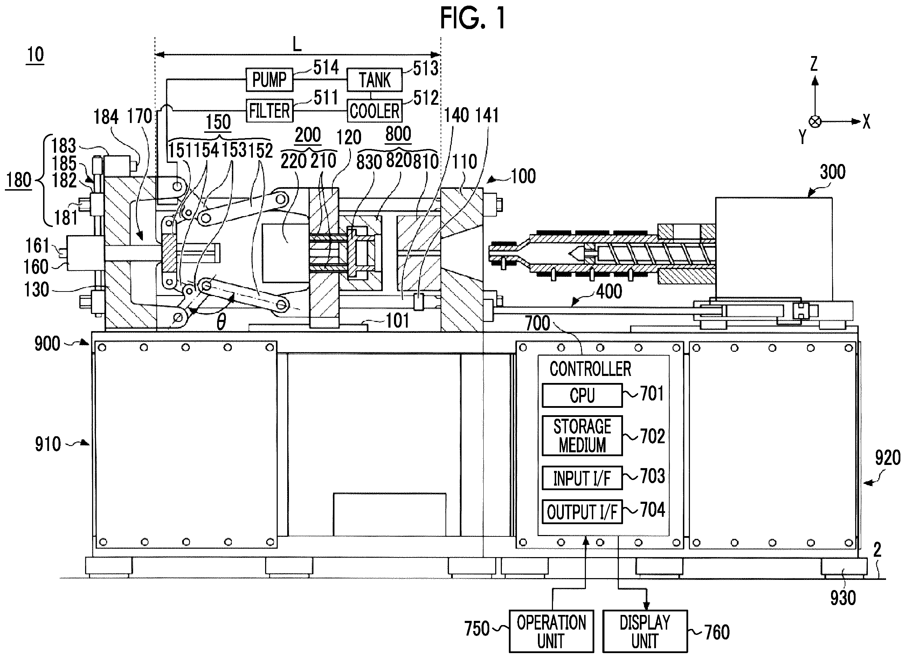

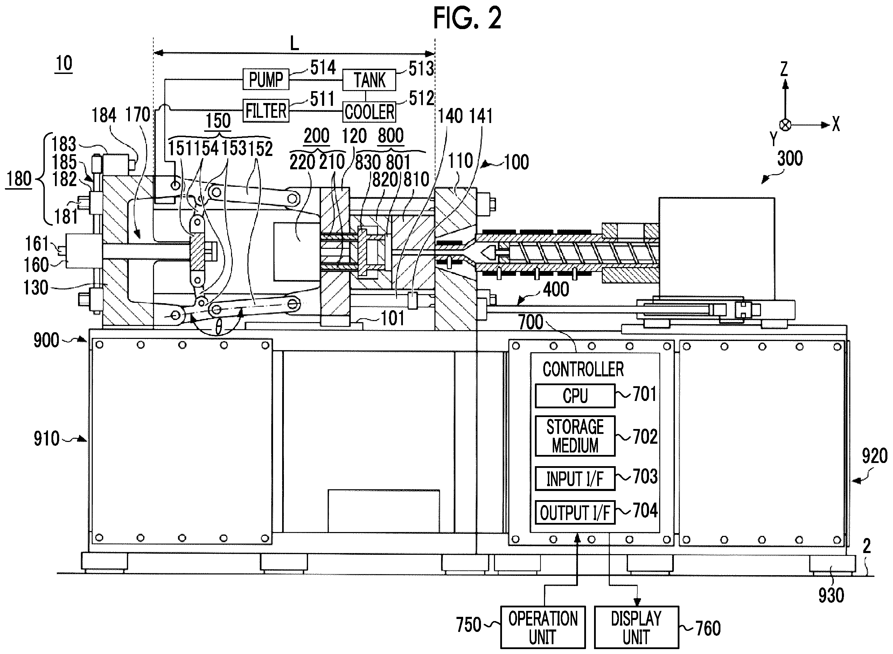

Fig. 1 is a view showing a state when mold opening of an injection molding machine according to an embodiment is completed. Fig. 2 is a view showing a state when a mold of the injection molding machine according to the embodiment is clamped. In Figs . 1 and 2, an X axis direction, a Y axis direction, and a Z axis direction are directions perpendicular to each other. The X axis direction and the Y axis direction indicate a horizontal direction, and the Z axis direction indicates a vertical direction. In a case where the mold clamping unit 100 is a horizontal type mold clamping unit, the X axis direction is mold opening and closing directions, and the Y axis direction is a width direction of an injection molding machine 10. A negative side in the Y axis direction is referred to as an operation side, and a positive side in the Y axis direction is referred to as a counter operation side.

As shown in Figs. 1 and 2, the injection molding machines 10 include the mold clamping unit 100, an ejector unit 200, an injection unit 300, a movement unit 400, a controller 700, and a frame 900. The frame 900 includes a mold clamping unit frame 910 and an injection unit frame 920. Each of the mold clamping unit frame 910 and the injection unit frame 920 is installed on a floor 2 via a leveling adjuster 930. The controller 700 is disposed in an internal space of the injection unit frame 920. Hereinafter, each component of the injection molding machine 10 will be described.

### (Mold Clamping Unit)

In descriptions of the mold clamping unit 100, a movement direction (X axis positive direction) of a movable platen 120 when a mold is closed is defined as a front side, and a movement direction (X axis negative direction) of the movable platen 120 when the mold is open is defined as a rear side.

The mold clamping unit 100 performs mold closing, pressure rising, mold clamping, decompression, and mold opening of a mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adj ustment mechanism 180.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, the mold closing, the pressure rising, the mold clamping, the decompression, and the mold opening of the mold clamping unit 800 are performed.

The toggle support 130 is connected so as to be separated from the stationary platen 110, and is placed on the mold clamping unit frame 910 to be movable in mold opening and closing directions. In addition, the toggle support 130 may be disposed to be movable along a guide which is placed on the mold clamping unit frame 910. The guide of the toggle support 130 may be also used as the guide 101 of the movable platen 120.

In addition, in the present embodiment, the stationary platen 110 is disposed to be fixed to the mold clamping unit frame 910, and the toggle support 130 is disposed to be movable in the mold opening and closing directions with respect to the mold clamping unit frame 910. However, the toggle support 130 may be disposed to be fixed to the mold clamping unit frame 910, and the stationary platen 110 may be disposed to be movable in the mold opening and closing directions with respect to the mold clamping unit frame 910.

The tie bar 140 connects the stationary platen 110 and the toggle support 130 with a gap L in the mold opening and closing directions. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected by pins or the like. The first link 152 is attached to the movable platen 120 so as to be oscillated by pins or like. The second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressure rising process, a mold clamping process, a decompression process, a mold opening process, or the like under the control of the controller 700.

In the mold closing process, the mold clamping motor 160 is driven and the crosshead 151 moves forward to a mold closing completion position at a set movement speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressure rising process, the mold clamping motor 160 is further driven, the crosshead 151 further moves forward from the mold closing completion position to a mold clamping position, and thus, the mold clamping force is generated.

In the mold clamping process, the mold clamping motor 160 is driven, and the position of the crosshead 151 is maintained at the mold clamping position. In the mold clamping process, the mold clamping force generated in the pressure rising process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

One cavity space 801 may be provided or a plurality of cavity spaces 801 may be provided. In the latter case, a plurality of molding products can be simultaneously obtained. An insert material may be disposed in a portion of the cavity space 801, and the other portion of the cavity space 801 may be filled with the molding material. The insert material and the molding material are integrated with each other, and thus, the molding product can be obtained.

In the decompression process, the mold clamping motor 160 is driven, and the crosshead 151 moves rearward from the mold clamping position to a mold opening start position. Accordingly, the movable platen 120 moves rearward, and the mold clamping force is reduced. The mold opening start position and the mold closing completion position may be the same position as each other.

In the mold opening process, the mold clamping motor 160 is driven and the crosshead 151 moves rearward from the mold opening start position to a mold opening completion position at a set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressure rising process, and the mold clamping process are collectively set as a series of setting conditions. For example, a movement speed or position (including mold opening start position, movement speed switching position, mold closing completion position, and mold clamping position) of the crosshead 151 and the mold clamping force in the mold closing process and the pressure rising process are collectively set as a series of setting conditions. The mold closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the decompression process and the mold opening process. For example, the movement speed or positions (mold opening start position, movement speed switching position, and mold opening completion position) of the crosshead 151 in the decompression process and the mold opening process are collectively set as a series of setting conditions. The mold opening start position, the movement speed switching position, and the mold opening completion position are arranged in this order from the from side to the rear side and indicate start points and end points of sections where the movement speed is set. The movement speed is set for each section. The movement speed switching position may be one or more. The movement speed switching position may not be set. The mold opening start position and the mold closing completion position are the same as each other. Moreover, the mold opening completion position and the mold closing start position may be the same as each other.

In addition, instead of the movement speed, the positions, or the like of the crosshead 151, a movement speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a mold touch where the movable mold 820 comes into contact with the stationary mold 810 becomes a predetermined angle.

The mold clamping unit 100 includes the mold space adjustment mechanism 180. The mold space adjustment mechanisms 180 performs the mold space adjustment by adjusting the gap L between the stationary platen 110 and the toggle support 130. In addition, for example, a timing of the mold space adjustment is performed from an end of the molding cycle to a start of the next molding cycle. For example, the mold space adjustment mechanism 180 includes a screw shaft 181 which is formed on a rear end portion of the tie bar 140, a screw nut 182 which is supported by the toggle support 130 to be rotatable and immovable forward or rearward, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, a position of the toggle support 130 with respect to the tie bar 140 is adjusted, and thus, the gap L between the stationary platen 110 and the toggle support 130 is adjusted. Moreover, a combination of a plurality of the mold space adj ustment mechanisms may be used.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

The ejector unit 200 is attached to the movable platen 120 and moves forward or rearward together with the movable platen 120. The ejector unit 200 performs an ejection process under the control of the controller 700. In the ejection process, an ejector rod 210 is moved forward from a standby position to an ejection position at a set movement speed by a driving mechanism 220, and thus, a movable member 830 is moved forward and the molding product is ejected. Thereafter, the ejector rod 210 is moved rearward at a set movement speed by the driving mechanism 220, and thus, the movable member 830 is moved rearward to an original standby position.

### (Injection Unit)

The injection unit 300 is disposed to be movable forward or rearward with respect to the mold unit 800. The injection unit 300 comes into contact with the mold unit 800, and thus, the cavity space 801 in the mold unit 800 is filled with the molding material. The injection unit 300 performs a plasticizing process, a filling process, a holding pressure process, or the like under the control of the controller 700. The filling process and holding pressure process are collectively referred to as an injection process. In the plasticizing process, a predetermined amount of liquid molding material is accumulated. In the filling process, the cavity space 801 in the mold unit 800 is filled with the liquid molding material accumulated in the plasticizing process. In the holding pressure process, a holding pressure of the molding material is maintained at a set pressure.

### (Movement Unit)

The movement unit 400 moves the injection unit 300 forward or rearward with respect to the mold unit 800.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressure rising process, the mold clamping process, the filling process, the holding pressure process, a cooling process, the decompression process, the mold opening process, the ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressure rising process, the mold clamping process, the filling process, the hold pressure process, the cooling process, the decompression process, the mold opening process, and the ejection process in this order. Here, this order is an order of the start of each process. The filling process, the holding pressure process, and the cooling process are performed between the mold clamping processes. The start of the mold clamping process may coincide with the start of the filling process. The end of the decompression process coincides with the start of the mold opening process.

In addition, in order to shorten the molding cycle time, the plurality of processes may be simultaneously performed.

In addition, the once molding cycle may include a process other than includes the plasticizing process, the mold closing process, the pressure rising process, the mold clamping process, the filling process, the hold pressure process, the cooling process, the decompression process, the mold opening process, and the ejection process.

The controller 700 is connected to an operation unit 750 or the display unit 760. The operation unit 750 receives an input operation from a user and outputs a signal corresponding to the input operation to the controller 700. The display unit 760 displays a display screen corresponding to the input operation of the operation unit 750 under the control of the controller 700.

The operation screen is used for the setting of the injection molding machine 10 or the like. A plurality of display screens are provided, and thus, are displayed to be switched or to overlap each other. A user operates the operation unit 750 while viewing the display screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other but may be provided independently. In addition, a plurality of the operation units 750 may be provided. The operation unit 750 and the display unit 760 are disposed on the negative side of the mold clamping unit 100 (more specifically, the stationary platen 110) in the Y axis direction. The negative side in the Y axis direction is referred to as the operation side, and the positive side in the Y axis direction is referred to as the counter operation side.

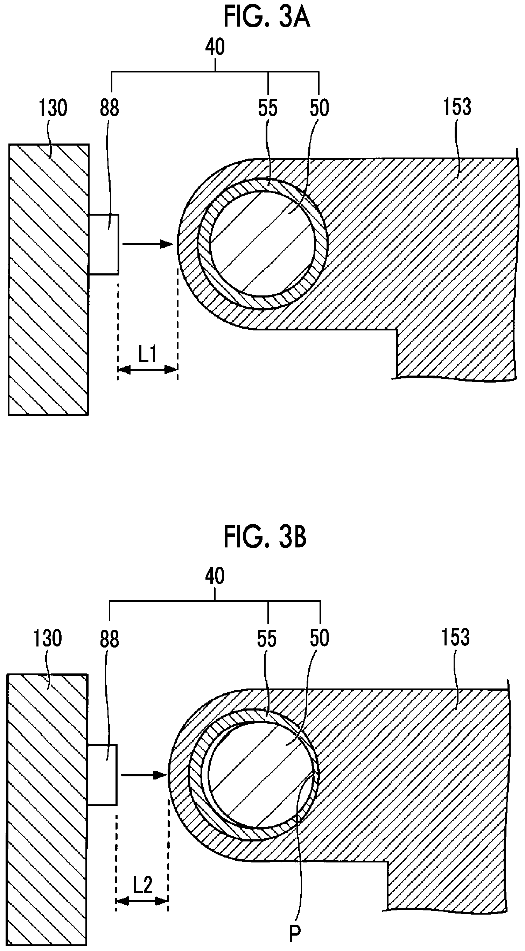

In the toggle mechanisms 150, a connection portion which connects a bearing 121 of the movable platen 120 and the first link 152 by a connection pin is formed. Similarly, in the toggle mechanisms 150, a connection portion which connects the first link 152 and the second link 153 by a connection pin is formed. In the toggle mechanism 150, a connection portion 40 which connects the second link 153 and a bearing 131 (refer to Figs. 3A and 3B described later) of the toggle support 130 by a connection pin 50 (refer to Figs. 3A and 3B described later) is formed. In the toggle mechanism 150, a connection portion which connects the second link 153 and the third link 154 by a connection pin is formed. In the toggle mechanisms 150, a connection portion which connects the third link 154 and the crosshead 151 by a connection pin is formed.

In the connection portion of the connection pin, the connection pin is fixed to be not rotatable to a bearing hole of one connection member (for example, bearing of toggle support 130), a bush 55 (refer to Figs. 3A and 3B) is press-fitted to the other connection member (for example, second link 153), and sliding surfaces of the bush 55 and the connection pin 50 is lubricated.

Next, with respect to a structure of the connection portion, for example, the connection portion 40 in which the second link 153 and the bearing of the toggle support 130 are connected by the connection pin 50 will be described with reference to Figs. 3A and 3B. Figs. 3A and 3B are cross-sectional schematic views explaining a wear detection unit of an embodiment. In addition, Fig. 3A shows an initial state and Fig. 3B shows a worn state. In addition, in Figs. 3A and 3B, an axial direction of the connection pin 50 is a normal direction of a paper surface. Moreover, the axial direction of the connection pin 50 is the Y direction (refer to Fig. 1).

A wear detection unit which detects wear of the sliding surfaces of the connection pin 50 and the bush 55 is provided in the connection portion 40. For example, the wear detection unit includes a position measuring unit 88 such as a laser displacement meter.

For example, the position measuring unit 88 is fixed to the toggle support 130, and detects a position of the second link 153 when the mold is clamped. Here, as shown in Fig. 3A, in the initial state, a distance from the toggle support 130 to the second link 153 is L1.

Meanwhile, as shown in Fig. 3B, in the worn state, the bush 55 is worn near a position P at which a large force is applied to a portion between the connection pin 50 and the bush 55 when the mold is clamped, and thus, the position of the second link 153 is displaced to the toggle support 130 side.

The controller 700 determines that the bush 55 is being worn, based on the position detected by the position measuring unit 88. For example, if a distance L2 detected by the position measuring unit 88 is a predetermined value or less, it is determined that the bush 55 is being worn. In addition, the distance L1 detected by the position measuring unit 88 when the mold is clamped in the initial state is stored in advance, and if a difference between the distance L2 and the distance L1 detected by the position measuring unit 88 when the mold is clamped is a predetermined value or more, it may be determined that the bush 55 is being worn.

Moreover, the case where the position measuring unit 88 is provided in the toggle support 130 is described. However, the present invention is not limited to this, and the position measuring unit 88 may be provided in the movable platen 120. In addition, the case where the position measuring unit 88 is fixed to the toggle support 130 and a relative position of the second link 153 with respect to the toggle support 130 is detected is described. However, the present invention is not limited to this. By detecting the relative position of the second link 153 with respect to other fixing members, the wear of the bush 55 may be detected. For example, the fixing member for fixing the position measuring unit 88 may be the frame 900 or may be a cover which covers the mold clamping unit 100. For example, the position measuring unit provided in the frame 900 detects the position of the toggle support 130 and the position of the second link 153. The controller 700 may obtain a relative position of the second link 153 with respect to the toggle support 130 from the detection result to detect the wear of the bush 55. Moreover, in a case where the position of the toggle support 130 when the mold is clamped is known, the position measuring unit may be configured to detect the position of the second link 153.

In addition, the case where the position of the second link 153 is detected when the mold is clamped is described. However, the present invention is not limited to this, and a position of the first link 152 or the third link 154 may be detected.

In this way, in the wear detection unit of the embodiment, the sensor is not provided inside the toggle mechanism 150. Accordingly, it is possible to improve assemblability and maintainability of the toggle mechanism 150.

Moreover, the wear detection unit may be a strain sensor which is provided in the link. However, this wear detection unit does not form part of the present invention.

When the bush 55 is worn, distorted side of the link is changed. The controller 700 may determine the wear of the bush 55 based on a detected value of the strain gauge. Accordingly, it is not necessary to provide the sensor inside the toggle mechanism 150, and thus, it is possible to improve assemblability and maintainability of the toggle mechanism 150.

### Brief Description of the Reference Symbols

- 10:: injection molding machine
- 40:: connection portion
- 50:: connection pin
- 55:: bush
- 88:: wear detection unit
- 120:: movable platen
- 130:: toggle support (rear platen)
- 150:: toggle mechanism (link mechanism)
- 151:: crosshead (link)
- 152:: first link (link)
- 153:: second link (link)
- 154:: third link (link)

## Claims

1. An injection molding machine (10) comprising:
a toggle mechanism (150) which connects a movable platen (120) and a rear platen (130),
the toggle mechanism (150) includes
a plurality of links (151, 152, 153, 154),
a first connection portion (40) which connects the movable platen (120) and the link (152),
a second connection portion (40) which connects the links (152, 153) to each other, and
a third connection portion (40) which connects the rear platen (130) and the link (154),
at least one of the first to third connection portions (40) includes
a bush (55),
a connection pin (50) which is inserted into the bush (55), the toggle mechanism **characterized in that** it includes
a wear detection unit (88) which detects wear of sliding surfaces of the bush (55) and the connection pin (50), and
the wear detection unit (88) detects a position of a member in which the bush (55) is disposed.

2. The injection molding machine according to claim 1,
wherein the wear detection unit (88) detects the wear based on a position of the member when a mold is clamped.

3. The injection molding machine according to claim 2,
wherein the wear detection unit (88) detects the wear based on a displacement between a position of the member when the mold is clamped in an initial state before the wear and the position of the member when the mold is clamped.

## Patentansprüche

1. Spritzgießmaschine (10), umfassend:
einen Kniehebelmechanismus (150), der eine bewegliche Platte (120) und eine hintere Platte (130) verbindet,
wobei der Kniehebelmechanismus (150) umfasst mehrere Bindeglieder (151, 152, 153, 154),
einen ersten Verbindungsabschnitt (40), der die bewegliche Platte (120) und das Bindeglied (152) verbindet,
einen zweiten Verbindungsabschnitt (40), der die Bindeglieder (152, 153) miteinander verbindet, und
einen dritten Verbindungsabschnitt (40), der die hintere Platte (130) und das Bindeglied (154) verbindet,
zumindest einer der ersten bis dritten Verbindungsabschnitte (40) umfasst
eine Buchse (55),
einen in die Buchse (55) eingeführten Verbindungsstift (50),
wobei der Kniehebelmechanismus **dadurch gekennzeichnet ist, dass** er eine Verschleißdetektionseinheit (88) umfasst, die Verschleiß von Gleitflächen der Buchse (55) und des Verbindungsstifts (50) detektiert, und
die Verschleißdetektionseinheit (88) eine Position eines Elements detektiert, in dem die Buchse (55) angeordnet ist.

2. Spritzgießmaschine nach Anspruch 1,
wobei die Verschleißdetektionseinheit (88) den Verschleiß basierend auf einer Position des Elements detektiert, wenn eine Form geklemmt ist.

3. Spritzgießmaschine nach Anspruch 2,
wobei die Verschleißdetektionseinheit (88) den Verschließ basierend auf einer Verlagerung zwischen einer Position des Elements, wenn die Form geklemmt ist, in einem Anfangszustand vor dem Verschleiß und der Position des Elements, wenn die Form geklemmt ist, detektiert.

## Revendications

1. Une machine de moulage à injection (10) comprenant :
un mécanisme de bascule (150) qui relie une platine mobile (120) et une platine arrière (130),
le mécanisme de bascule (150) comprenant
une pluralité de liaisons (151, 152, 153, 154),
une première partie de raccordement (40) qui relie la platine mobile (120) et la liaison (152),
une seconde partie de raccordement (40) qui relie les liaisons (152, 153) les unes aux autres, et
une troisième partie de raccordement (40) qui relie la platine arrière (130) et la liaison (154),
au moins l'une de la première à la troisième parties de raccordement (40) comprend
une chemise (55),
une broche de raccordement (50) qui est insérée dans la chemise (55),
le mécanisme de bascule étant **caractérisé en ce qu'**il comprend
une unité de détection d'usure (88) qui détecte l'usure des surfaces de glissement de la chemise (55) et de la broche de raccordement (50), et
l'unité de détection d'usure (88) détecte une position d'un élément dans lequel la chemise (55) est disposée.

2. La machine de moulage à injection selon la revendication 1,
dans laquelle l'unité de détection d'usure (88) détecte l'usure sur la base de la position de l'élément lorsque le moule est fixé.

3. La machine de moulage à injection selon la revendication 2,
dans laquelle l'unité de détection d'usure (88) détecte l'usure sur la base d'un déplacement entre une position de l'élément lorsque le moule est fixé dans un état initial avant l'usure et la position de l'élément lorsque le moule est fixé.
